# EUROPEAN PATENT APPLICATION

(11) **EP 3 404 377 A2**
(43) Date of publication of application: **21.11.2018**
(21) Application number: 18154782.9
(22) Date of filing: 01.02.2018
(51) Int. Cl.: G01F 25/00, G01D 4/00, G01D 18/00

(54) **MODULAR APPARATUS FOR TESTING GAS METERS**

(30) Priority: 03.02.2017 US 201715423650
(71) Applicant: Dresser, Inc., Addison, Texas 75001 (US)
(72) Inventor: ARTIUCH, Roman Leon, Houston, TX 77041 (US); MARTIN, Jeff Thomas, Houston, TX 77041 (US)
(74) Representative: Illingworth-Law, William Illingworth

(57) **Abstract**

A test apparatus (100) to test operation of a gas meter (108). The test apparatus (100) may include metrology devices, namely, a master meter (110) and a measuring device (112), typically with a sensor to measure ambient conditions that prevail at the master meter (110) and the gas meter (108). Each of the metrology devices (110, 112) can be configured as a self-contained, independent unit that can process analog signals to generate a digital signal (114). A controller (128) may process these digital signals (114) to convey information that defines flow volume for gas (122) that flows through the gas meter (108). The controller (128) may also be configured to verify a regulatory status for the metrology devices (110, 112). These configurations can use validation data stored on the metrology devices (110, 112) separate and independent of the controller (128). In this way, the test apparatus (100) assumes a modular structure that allows the metrology devices (110, 112) to swap into and out of the test apparatus (100).

## Description

### BACKGROUND

Engineers expend great efforts to make devices easy to assemble, reliable to operate, and amenable to maintenance and repair tasks. Hardware constraints can frustrate these efforts because the hardware lacks appropriate functionality and because any improvements can increase costs and/or add complexity to the device. For metrology hardware, the constraints may result from "legal metrology" standards that regulatory bodies promulgate under authority or legal framework of a given country or territory. These standards may be in place to protect public interests, for example, to provide consumer protections for metering and billing use of fuel. These protections may set definitions for units of measure, realization of these units of measure in practice, application of traceability for linking measurement of the units made in practice to the standards and, importantly, ensure accuracy of measurements.

### SUMMARY

The subject matter of this disclosure relates to metrology hardware. Of particular interest herein is a test apparatus that implements techniques to qualify or "prove" accuracy and performance of metrology devices like flow meters. The improvements noted below configure the test apparatus to perform *in situ* verification of its constituent components.

Some embodiments can verify that components that connect to the device are approved (or certified) to meet legal metrology standards. These configurations permit the approvals to occur separately or independently, often outside of the normal manufacturing environment or calibration regime that occurs prior to use of the test apparatus in the field. This feature results in a "modular" structure for the test apparatus that permits pre-certified components to "swap" into and out of the test apparatus. This structure may benefit the test apparatus by reducing costs of manufacture, simplifying tasks to expand or modify functionality of the test apparatus in the field, and supporting in-field maintenance, repair, and calibration, all while ensuring that the test apparatus still meets legal metrology standards. Many of these benefits arise because the modular structure does not require the test apparatus to ship from the field to a manufacturing facility, as is normally the case.

The test apparatus serves to qualify devices, like flow meters, across a wide range of applications. For example, the fuel gas industry installs gas meters in-line to measure consumption, bill customers, and manage inventory. One type of gas meter may include an impeller that rotates in response to flow of gas. Each rotation of the impeller may correspond to a certain amount of gas passing through the meter. The gas meter (or collateral system) can monitor rotation of the impeller to quantify the amount of gas. Precise allocations, however, may require more complex calculations to account for certain factors like line pressure, flow rate, and temperature that prevail at the location of the gas meter.

Some embodiments are configured to prove the accuracy of the gas meter in the field. These configurations can pass a test gas through both the gas meter (or "meter-under-test") and a second meter (or "master meter") that is known to meet some accepted performance standard. To arrive at meter accuracy, or meter proof, the techniques look to the relationship between the volume of air that passes through the meter-under-test and the volume registered by the master meter.

Some embodiments are generally simple in design. These embodiments may include a cart-like structure that carries a test rig with various components like the master meter(s), a fluid source (e.g., a blower), and sensors to collect data relevant to the proof of the meter-under-test. The test rig may also include a control structure to operate these components. This control structure may execute software that is necessary to administer the proof (e.g., to regulate operation of the blowers), as well as to perform the data analysis to arrive at the measured accuracy of the gas meter. Some embodiments may wholly integrate the control structure on-board the test apparatus, although this disclosure contemplates use of a computer (e.g., a lap-top, tablet, etc.) that couples with the on-board control structure via an appropriate connection (e.g., USB, RS-232, Bluetooth®, etc.).

### BRIEF DESCRIPTION OF THE DRAWINGS

Reference is now made briefly to the accompanying drawings, in which:
FIG. 1 depicts a schematic diagram of an exemplary embodiment of a test apparatus;
FIG. 2 depicts a schematic diagram of the test apparatus of FIG. 1;
FIG. 3 depicts a schematic diagram of mobility structure for the test apparatus FIG. 1;
FIG. 4 depicts a flow diagram of an exemplary embodiment of a method for in situ verification of devices that integrate onto the test apparatus of FIG. 1;
FIG. 5 depicts a flow diagram of an example of the method of FIG. 4;
FIG. 6 depicts a schematic diagram of an exemplary topology for the test apparatus of FIG. 1;
FIG. 7 depicts a schematic diagram of an exemplary topology for a measuring device for use in the test apparatus of FIG. 6; and
FIG. 8 depicts a schematic diagram of an exemplary topology for a measuring device for use in the test apparatus of FIG. 6.

Where applicable like reference characters designate identical or corresponding components and units throughout the several views, which are not to scale unless otherwise indicated. The embodiments disclosed herein may include elements that appear in one or more of the several views or in combinations of the several views. Moreover, methods are exemplary only and may be modified by, for example, reordering, adding, removing, and/or altering the individual stages.

### DETAILED DESCRIPTION

The discussion below describes embodiments of a test apparatus. But these embodiments offer a unique solution that integrates *in situ* component verification to account for legal metrology standards that the test apparatus must meet because of the critical role it serves to certify metrology devices (e.g., gas meters) for operation in the field. This feature is an improvement over existing designs that offer limited, if any, functions to process data, let alone to manage integrity of the system components. In this regard, the embodiments herein do not need to journey from customer site to manufacturing facility for most maintenance tasks, which is beneficial both to avoid shipping costs (because the test apparatus weighs several hundred to thousands of pounds) and delays that might take the test apparatus out of operation for upward of several months.

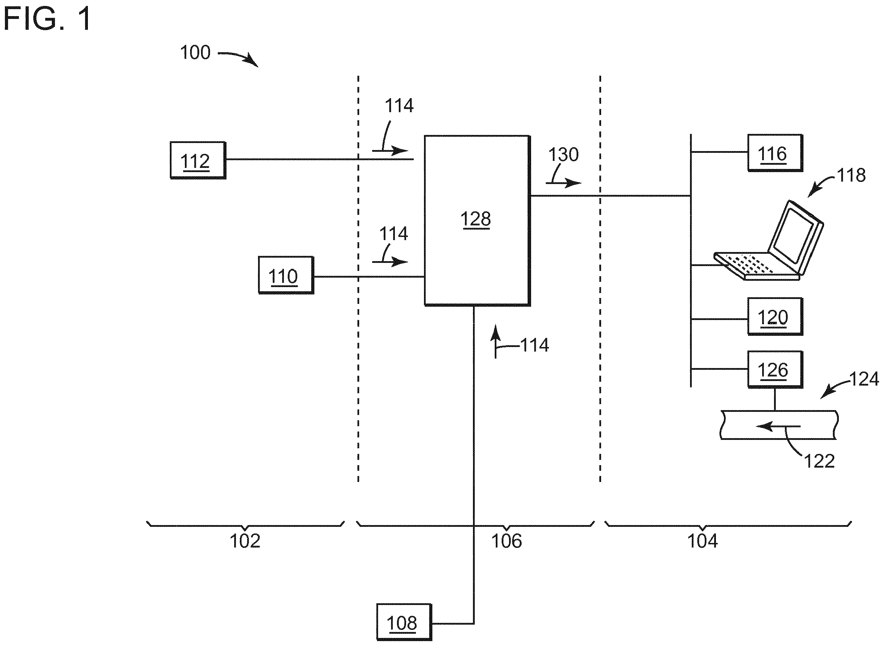

FIG. 1 depicts a schematic diagram of an exemplary embodiment of a test apparatus 100 that can "prove" operation of metrology devices. This embodiment includes hardware that integrates several components (e.g., a first component 102, a second component 104, and a third component 106) to execute a test protocol or "proof' on a meter-under-test 108 (or "MUT 108" or "target meter 108"). The first component 102 may include metrology devices (e.g., a master meter 110 and a measuring device 112) that are required to comply with legal metrology standards for use in the test apparatus 100. Like the target meter 108, the devices 110, 112 may generate a first signal 114, preferably in digital format. The second component 104 may include devices that are not subject to any (or limited) regulatory scrutiny or approval. These devices may include a display 116, for example, an alpha-numeric device that can convey a quantified value for the measured parameters. Other devices may include a peripheral computing device 118 (like a lap-top) and a power supply 120. The second component 104 may also include a fluid moving unit to transfer material 122 through a fluid circuit 124 like piping or tubing. The fluid moving unit may embody a flow device 126 (e.g., a blower, pump, compressor, etc.) that delivers pressurized fluid (e.g., air) to the meters 108, 110. However, material 122 may include any variety of fluids (e.g., liquids and gases), solids, and fluid/solid mixes, as well. The third component 106 can include a controller 128 that can process the first signal 114 from the meters 108, 110 and the measuring device 112. These processes may result in a second signal 130. Examples of the second signal 130 may be in digital or analog formats, as desired.

At a high level, the controller 128 configures the test apparatus 100 to ensure *in situ* that components meet appropriate legal metrology standards. This configuration creates a "modular" structure for the test apparatus 100. The modular structure may permit the metrology devices 110, 112 to be certified separate from, or independent of, the test apparatus 100 as a whole, which occurs primarily at a manufacturing facility far removed from the location of the target meter 108. In this way, the metrology devices 110, 112 can swap into and out of the test apparatus 100 in favor of a different device or to add additional devices, as desired. This feature is useful, for example, to remediate, expand, or change functionality of the test apparatus 100 in the field as well as to simplify manufacture, calibration, and re-calibration of the test apparatus 100 and its components (e.g. the master meter 110, measuring device 112, the controller 128, etc.) to meet specific customer requirements.

Meters 108, 110 embody devices that can measure various parameters of material 122. These parameters include flow rate and flow volume; however, this listing is not exhaustive as relates to applications of the subject matter herein. In one example, used throughout, the devices embody a gas meter. Such devices may utilize impellers and diaphragms that move to measure fixed, defined volume.

Measuring device 112 can be configured with sensors to generate data relevant to the proof of the target meter 108. These configurations can embody stand-alone devices that couple and decouple with the controller 128. Examples of the sensors may include thermocouples, thermistors, transducers, and like devices that are sensitive to certain operating conditions at or proximate the meters 108, 110. The operating conditions may also relate to relative humidity, material (e.g., gas) composition, flow energy, and the like.

Collectively, the meters 108, 110 and the measuring device 112 may be configured so that the first signal 114 is in digital format (or "digitized" or "digital"). Effectively, these configurations perform all signal processing locally so that the first signal 114 is digital. This feature is important to permit the independent verification for the device to occur. In practice, the digital format is effectively a pulse (or series of pulses) that the controller 128 can use for purposes of the functions disclosed herein. The pulses may correspond with analog data. On the meters 108, 110, the analog data may relay rotation of impellers in response to flow of material 122. The analog data on the measuring device 112 may originate at sensors that convey temperature and pressure of the material 122.

Use of the digital format benefits the modular structure for the test apparatus 100 because each of the meter 110 and measuring device 112 operate as self-contained, independent units. These units may be configured to internally perform all necessary processes on the analog data so that the pulses relay information to the controller 128 properly. During manufacture, the units may be commissioned for use in the field. The units may undergo tests to certify that it meets legal metrology standards prior to use in the test apparatus 100. Proper firmware may be installed. The units may also undergo calibration procedures. In practice, data that relates to commissioning may be stored locally on the unit, for example, in storage memory that is resident thereon. This data may include calibration data (e.g., coefficients, constants, etc.) that relate the analog data (e.g., from the sensors) to values that comport with the digital format of the first signals 114 that can transmit to the controller 128. Other data may also help validate the device including data that identifies the device (e.g., serial number, manufacture dates, model type, etc.), that defines the firmware (e.g., version, checksum or integrity data, etc.), and that assigns other features (e.g., calibration due dates, firmware upgrade due dates, etc.) that are relevant to the device.

The controller 128 may be configured to verify, *in situ,* that these independent units are properly certified, calibrated, and ready for use on the test apparatus 100. In this way, units of the same design can replace or "swap" with one another without any deviation in accuracy of the test apparatus 100. The controller 128 may require access to the stored data on the units for this purpose. In one implementation, the controller 128 may exchange data with units to facilitate a "handshake." This handshake may occur at the time the unit plugs or attaches to the controller 128; however this disclosure contemplates that the controller 128 may continuously poll the units to receive the data, if desired.

The controller 128 may also be outfit to allow the test apparatus 100 to perform functions to test the target meter 108. These functions may, for example, operate the flow device 126 to flow material 122 through the meters 108, 110. In other configurations, the functions process data to quantify the operative characteristics of the target meter 108. For example, the controller 128 may gather data from the meters 108, 110 and the measuring device 112. The data may be useful to establish a relationship between the volume of air that passes through the target meter 108 and the volume registered by the master meter 110. This relationship defines whether the target meter 108 meets the legal metrology standards.

For functionality, the controller 128 may utilize executable instructions, namely, software and firmware. The instructions may be split, or bifurcated, to correspond with verification ("legal") functions and operative ("non-legal") functions. The latter, non-legal functions may pertain mainly to operation of the peripheral components, for example, turning the flow device 126 on and off during the proving processes. Verification, as noted above, provides *in situ* confirmation that devices meet necessary legal metrology standards. Notably, this functional split is beneficial to allow upgrades or changes to instructions for the non-legal functions, which is allowed because the upgrades are held to any particular standard. In contrast, changes to instructions for the legal functions may require special authorization, like codes or passwords, to allow access into the appropriate memory for such upgrades to occur on the test apparatus.

Examples of the controller 128 can be configured to read, write, and/or store data on-board the test apparatus 100. Such configurations may require a repository (also "database"), typically found on storage memory. This repository can retain records, historical information, and like data that may reflect implementation of the test protocol at various times, at various locations, and across a plurality of target meters (e.g., target meter 108). The repository may offer a distinct advantage to allow the device to retain information, which effectively frees the end user to employ the test apparatus 100 to gather data and perform additional detailed analysis beneficial to the end user, operator, and/or end user of the target meter 114.

The peripheral components 118, 120 may include devices that are useful to operate the test apparatus 100. For example, the power source 118 may provide electrical power. Batteries may be useful for this purpose. The computing device 120 may be configured to interface with the test apparatus 100. These configurations may embody a separate device, but executable instructions that integrate onto one or more of the controller 128 may also be useful for this purpose. This device may gather and process data. It may also display a graphical user interface (GUI) to allow an end user (e.g., a technician) to interface with the test apparatus 100. This interface may be useful to initiate tasks to repair, upgrade, assemble, or otherwise modify the structure of the test apparatus 100.

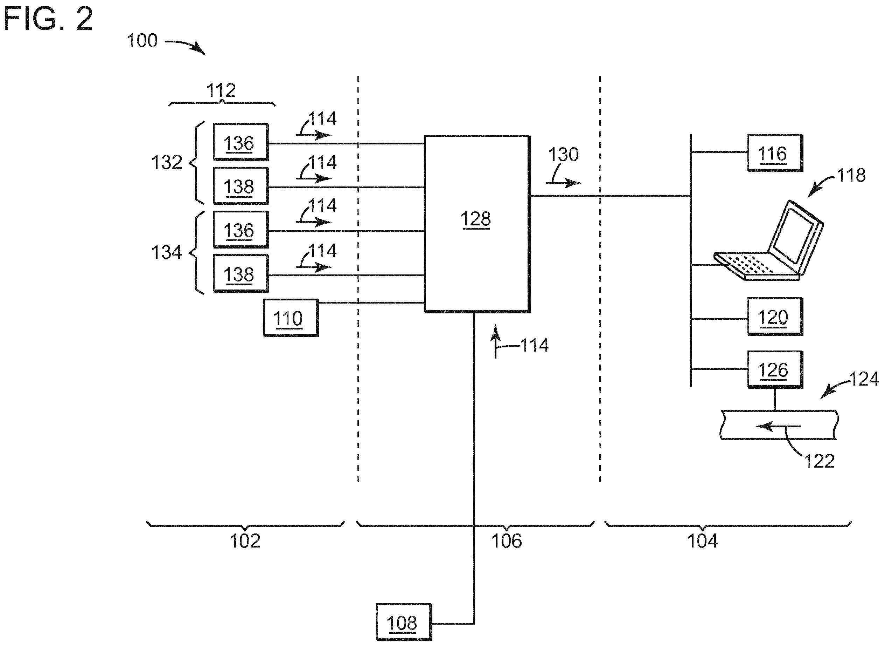

FIG. 2 illustrates a schematic diagram of one configuration for the test apparatus 100. The measuring device 112 may embody two parts (e.g., a first part 132 and a second part 134), each having a pair of devices (e.g., a first measuring device 136 and a second measuring device 138). The two parts 132, 134 correspond with the meters 108, 110, respectively. However this disclosure does contemplate that the test apparatus 100 may leverage any number of measuring devices for its operation. The number of measuring devices may depend on particulars of the application for the test apparatus 100.

The devices 136, 138 can be configured to measure different characteristics and conditions that may be useful to generate the measured parameters. The configurations could provide any variety of data for processing at the controller 128. For gas meters, the meters 108, 110 may generate data that defines a value for flowing volume of material 122. The measuring devices 136, 138 may embody modules that can generate data that defines values for fluid conditions inside of the gas meters. These fluid conditions may include, for example, temperature from measuring device 136 and pressure from measuring device 138. First signals 114 may convey the data from each of the gas meters 108, 110 and parts 132, 134 to the controller 128 in digital format. The controller 128 can use the data from the modules to "adjust" or "correct" the flowing volume from the gas meters 108, 110. These functions account for fluid conditions that prevail in the gas meters 108, 110.

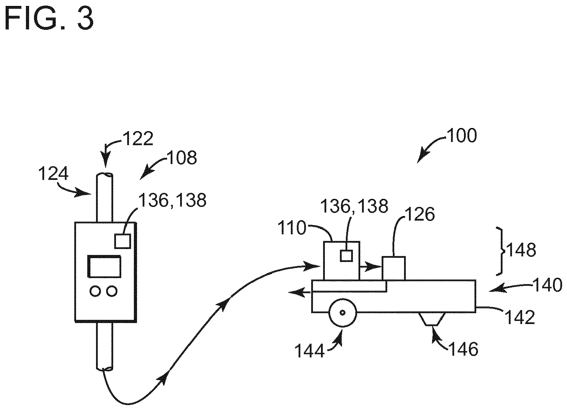

FIG. 3 depicts a schematic diagram of an exemplary embodiment of the test apparatus 100 to discuss mobility of the device. This embodiment includes a platform 140 that is configured to transit among locations (e.g., from a first position to a second position). The platform 140 can have a base structure 142 and one or more support members (e.g., a first support member 144 and a second support member 146). Components to administer the proof may form a test rig 148 that resides on the platform 140. For example, the test rig 148 may incorporate the master meter 110 and the blower 126. The measuring devices 136, 138 may reside on the meters 108, 110, although proximity to the meters 108, 110 may also be acceptable. In one implementation, the fluid circuit 124 exhausts material 122 into the base structure 142.

The platform 140 is configured to integrate the various members 144, 146, 148 together. At a structural-level, this configuration can support the weight and disposition of the test rig 148, while at the same time offering mobility to ease the use of the test apparatus 100 by an end user to move, set-up, and administer the test protocol quickly and efficiently. Examples of the base structure 142 can have a frame that is constructed of materials, typically metals in a variety of forms, e.g., tubes, plates, etc. In one implementation, the frame can serve to dampen noise and vibration during operation of the test apparatus 100. This construction can accommodate fasteners (e.g., bolts, screws, etc.) that are useful to secure the members to the frame. The support members 144, 146 can serve both to facilitate mobility (e.g., as wheels and/or castors) and support (e.g., as stanchions, feet, etc.). In this way, the end user can position (e.g., roll) test apparatus 100 within proximity of the target meter 108 to perform the proof.

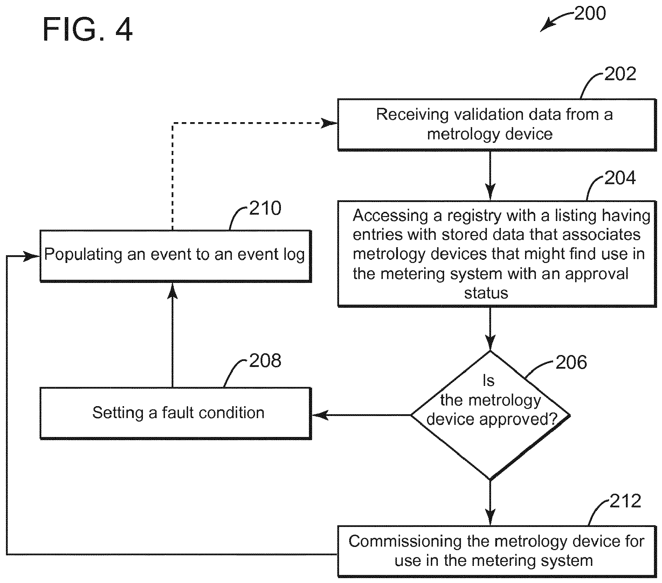

FIG. 4 illustrates a flow diagram of an exemplary embodiment of a method 200 to implement an *in situ* commissioning process for the measuring device. This diagram outlines stages that may embody executable instructions for one or more computer-implemented methods and/or programs. These executable instructions may be stored on the controller 128 as firmware or software. The stages in this embodiment can be altered, combined, omitted, and/or rearranged in some embodiments.

Operation of the method 200 may ensure integrity of components on the test apparatus 100. The method 200 may include, at stage 202, receiving validation data from a metrology device. The method 200 may also include, at stage 204, accessing a registry with stored data in a listing having entries that associate metrology devices that might find use in the test apparatus with a regulatory status. The method 200 may further include, at stage 206, comparing the validation data to the stored data in the listing to determine whether the metrology device is approved for use in the test apparatus. If negative, the method 200 may include, at stage 208, setting a fault condition and, at stage 210, populating an event to an event log. Operation of the method 200 may cease at stage 210, effectively ceasing or preventing function of the test apparatus. In one implementation, the method 200 may return to receiving validation data at stage 202. On the other hand, if the metrology device is approved, the method 200 may include, at stage 212, commissioning the metrology device for use in the test apparatus and, where applicable, populating an event to an event log at stage 210.

At stage 202, the method 200 may receive validation data from the metrology devices 110, 112. The validation data may define or describe information that is unique (as compared to others) to the respective metrology devices 110, 112. Examples of the information may include serial numbers, cyclic redundancy check (CRC) numbers, checksum values, hash sum values, or the like. Other information may define operative conditions or status for the metrology devices 110, 112, for example, calibration data that is stored locally on the device. This information may be stored on to the metrology devices 110, 112 at the time of manufacture. In one implementation, the metrology devices 110, 112 may be configured so that all or part of the validation data cannot be changed or modified once manufacture or assembly is complete. This feature may deter tampering to ensure that the metrology devices 110, 112 and the test apparatus 100, generally, will meet legal and regulatory requirements for purposes of proving operation of the target meter 108.

At stage 204, the method 200 may access a registry with a listing of stored data that associates metrology devices with a regulatory status. Table 1 below provides an example of this listing.

**Table 1**

| **S/N** | **Device Type** | **Calibration data** | **Firmware data** | **Physical data** | **Regulatory Status** |
|---|---|---|---|---|---|
| 001 | Flow meter | C1 | V1 | P1 | Approved |
| 002 | Measuring | C2 | V2 | P2 | Approved |
| 003 | Measuring | C3 | V3 | P3 | Not Approved |
| 004 | Firmware | C4 | V4 | P4 | Approved |

The listing above may form an "integrity" log that the controller 128 uses to properly evaluate and integrate the metrology devices 110, 112 into the test apparatus 100. Stored data in the entries may define various characteristics for metrology devices. As shown above, the listing may have entries for separate metrology devices, often including a regulatory status that relates to the metrology device. This regulatory status may reflect that the metrology device is "approved" or "not approved;" however other indicators to convey that the metrology devices 110, 112 may or may not be acceptable for use may be useful as well. Approval may indicate compliance with legal metrology standards, but this does not always need to be the case.

The entries may also include other information that may be useful for maintain traceability of the devices that connect to the test apparatus 100. This information nay include identifying information such as serial number (S/N) and device type. The entries may also include operating information that may relate specifically to the metrology device of the entry in the listing. The operating information may include calibration data, for example, values for constants and coefficients, as well as information (e.g., a date, a location, an operator) that describes the status of calibration for the metrology device of the entry in the listing. The operating information may further include firmware data, for example, information that describes the latest version that might be found on the metrology device.

For traceability, the integrity log may be pre-populated with identifying information for the metrology devices 110, 112 that ship with the test apparatus 100. This information may be stored at the time of manufacture. As noted below, this pre-populated listing may serve as a baseline to determine whether the metrology devices 110, 112 installed at manufacture are removed and replaced from the device. Periodic, automatic checks or polling of data from the connected metrology devices 110, 112 can retrieve the locally-stored identifying information. Failure for the locally-stored information to match the pre-populated identifying information in the integrity log may indicate that the connected metrology devices 110, 112 are not the same as had been previously installed on the test apparatus 100. Such indication could cause an alarm or response, e.g., to prevent operation of the test apparatus 100 until appropriate measures occur to reconcile the discrepancy between the connected metrology devices 110, 112 and those expected by the integrity log.

Traceability may also benefit from physical data that relates to the metrology devices 110, 112 on the test apparatus 100. The physical data may correlate, for example, each metrology device 110, 112 in the listing with a "port" or connection on the controller 128. The automatic polling of data from the connected metrology device s 110, 112 may identify improperly connected devices. In one implementation, changes in state at the connections can also signal that the connected metrology devices 110, 112 have been removed or otherwise manipulated (potentially tampered with) in a way that is not authorized.

Data in the integrity log may also benefit traceability of the metrology devices 110, 112. Calibration data and firmware data, for example, may be useful information to ensure that the connected metrology devices 110, 112 are correctly configured for use on the test apparatus 100. This modality may benefit from automated, periodic polling to interrogate the connected metrology devices 110, 112. In one implementation, the test apparatus 100 may use the pre-populated listing with calibration and firmware information to confirm that one or both of firmware and the calibration data on the metrology devices 110, 112 is not corrupted or is otherwise accepted for use on the test apparatus 100.

Further, data in the integrity log may also record operator information. Examples of this information may include names, passwords, employ ID numbers, and the like. As noted below, the method 200 may include stages to require a login or some other authentication for the operator. This login may further traceability by preventing operation of the test apparatus 100 with connected metrology devices 110, 112 that are not connected by authorized personnel.

At stage 206, the method 200 may compare the validation data to the stored data in the listing to determine whether the metrology device is approved for use in the test apparatus. This stage is useful to certify that the metrology devices 110, 112 are "approved" and meet the necessary legal metrology standards prior to being introduced into the test apparatus 100. This stage may include one or more stages as necessary so as to properly commission the metrology devices 110, 112. These stages may, for example, include determining whether the metrology device 110, 112 meets certain initial criteria. The initial criteria may distinguish the metrology components by type (e.g., hardware and executable instructions), version or revision, model or serial number, and other functional or physical characteristics. For hardware, the method 200 may also include one or more stages for using identifying information (e.g., serial number) to confirm that the metrology device 110, 112 is appropriate for use on the test apparatus 100 or that it is located or coupled with the controller 128 at a location that is appropriate for its type and functions. The stages may use signals from connectors to discern the location of the hardware on the controller 128.

The stages may also evaluate the status of the metrology device 110, 112. These stages may include stages for identifying calibration data from among the validation data that is received from the metrology device. In one implementation, the method 200 may include stages for confirming that the calibration data has not been corrupted or does not include corrupt information. Corruption might result from tampering with the hardware or by exposing the hardware to environmental conditions (e.g., radiation, temperature, etc.). For firmware, the method 200 may use version history and related items that may be useful to distinguish one set of executable instructions from another as well as for purposes of confirming that the set of executable instructions has not been corrupted. Checks on hardware and firmware may be performed automatically according to, for example, a pre-determined periodic time period.

At stage 208, the method 200 may set a fault condition in response to the assessment of the validation data (at stage 206). Examples of the fault condition may take the form of an alert, either audio or visually discernable, or, in some examples, by way of electronic messaging (e.g., email, text message, etc.) that can resolve on a computing device like a smartphone or tablet. In one implementation, the fault condition may interfere with operation of one or more functions on the test apparatus 100, even ceasing functionality of the whole system if desired. The fault condition may also convey information about the status of the commissioning process. This information may indicate that serial numbers are incorrect or unreadable, that calibration of the metrology device 110, 112 is out of data or corrupted, or that firmware versions and updates on the metrology device are out of date or corrupted.

At stage 210, the method 200 can populate an event to the event log. This event log may reside on the controller 128 as well as on the metrology devices 110, 112. In one implementation, the event can describe dated records of problems or issues that arise during the commissioning process. The event can also associate data and actions taken (e.g., calibration, updates, etc.) to commission the metrology component for use in the test apparatus 100. Relevant data may include updated to serial numbers and time stamps (e.g., month, day, year, etc.). The actions may identify an end user (e.g., a technician) and related password that could be required in order to change the configuration or update test apparatus 100 with, for example, replacements for the metrology devices 110, 112 or an additional measuring device 112.

At stage 212, the method 200 can commission the metrology device for use in the test apparatus. This stage may change operation of the controller 128 to accept or use the metrology component. Changes may update local firmware on the controller 128; although this may not be necessary for operation of the test apparatus 100. In one implementation, changes in the controller 128 may update the integrity log to include new entries or to revise existing entries with information about the connected and commissioned metrology devices 110, 112.

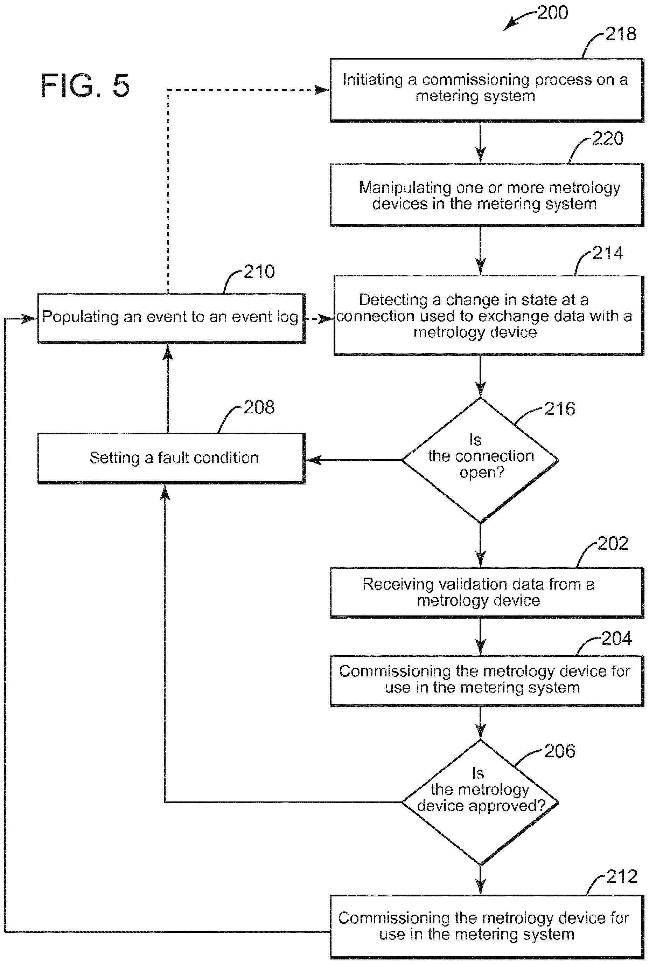

FIG. 5 illustrates a flow diagram of an example of the method 200 of FIG. 4. In this example, the method 200 may include, at stage 214, detecting a change in state at a connection used to exchange data with a metrology device and, at stage 216, determining the state of the connection. If the connection is open, the method 200 may continue, at stage 208, setting the fault connection and, at stage 210, populating an event to an event log. The method 200 may also continue to detect the change at the connection (at stage 214). If the connection is closed, the method 200 may continue, at stage 202, with the *in situ* commissioning process for the metrology device as discussed in connection with FIG. 4 above. In one implementation, the method 200 may include one or more stages that relate to interaction by an end user (e.g., a technician) to perform maintenance, repair, upgrades, assembly or like task to modify structure of a test apparatus. These stages may include, at stage 218, initiating a commissioning process on the test apparatus and, at stage 220, manipulating one or more metrology devices on the test apparatus.

At stage 214, the method 200 detects the change in state at the connection. As noted above, the change may correspond with a signal from a "port" on the controller 128, possibly a connector or connecting device that the metrology device 110, 112 couples with on the test apparatus 100. The signal may correspond with a pin on the connector. Values for this signal may correspond with a high voltage and a low or zero voltage, one each to indicate that the pin on the connector is in use or not in use with respect to the connected hardware. The signal could also arise in response to updates in executable instructions on the controller 128. In one implementation, the method 200 may include one or more stages for initiating the "handshake" in response to the signal. This handshake may cause the controller 128 to transmit data to the metrology device 110, 112. In return, the metrology device 110, 112 may retrieve and transmit validation data to the controller 128, as noted herein.

At stage 216, the method 200 determines the state of the connection. This stage may include one or more stages that compare the signal from the port to a look-up table or other threshold that indicates the state of the port. Open ports may indicate that hardware has been removed or is currently unavailable. On the other hand, closed ports may indicate that hardware is available to commence *in situ* commissioning process.

At stage 218, the method 200 initiates the commissioning process on the test apparatus. This stage may include one or more stages for receiving an input. Examples of the input may arise automatically, for example, to implement periodic checks of information (e.g., calibration data, calibration dates, etc.) on the connected devices based on a timer or other component internal to the controller 128 that automatically polls the metrology devices 110, 112. In one implementation, the input may arise externally from a remote device (e.g., computer, laptop, tablet, smartphone) that connects with the test appartus 100. This input may correspond with a technician plugging or unplugging one or more of the metrology devices 110, 112 from the controller 128 (at stage 220). The external input may be necessary to allow the test apparatus to operate with any new or different devices 110, 112. Data of the input may include a user name and password. In one example, the method 200 may include stages to create an event (at stage 212) that corresponds with the manipulation of the devices 110, 112.

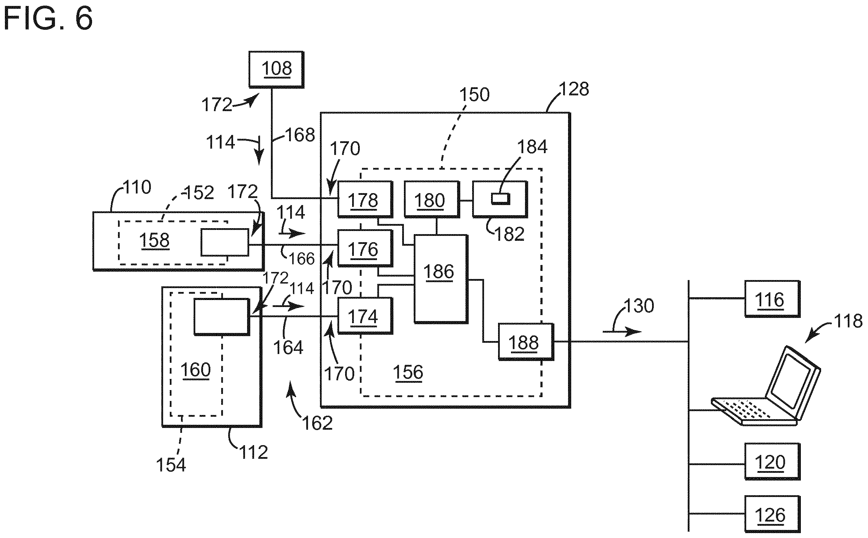

FIG. 6 depicts as a schematic diagram of an example of base-level topology for components in the test apparatus 100. This topology may utilize one or more operative circuit boards (e.g., a first circuit board 150, a second circuit board 152, and a third circuit board 154), each with circuitry (e.g., first circuitry 156, second circuitry 158, and third circuitry 160). A communication interface 162 may be useful to allow circuitry 156, 158, 160 to exchange the first signals 114. The communication interface 162 may include a cable assembly with cables (e.g., a first cable 164, a second cable 166, and a third cable 168) that extend between circuit boards 150, 152, between circuit boards 150, 154, and between circuit board 150 and corresponding electronics on the test meter 108 respectively. Construction of the cables 164, 166, 168 may comprise one or more combinations of conductive wires to conduct the first signals 114 between the circuitry 156, 158, 160. The cables 164, 166, 168 may have ends (e.g., a first end 170 and a second end 172) that are configured to interface with circuit boards 150, 152, 154. For example, at the first end 170, the cables 164, 166, 168 may include one or more connectors (e.g., a first connector 174, a second connector 176, and a third connector 178). The connectors 174, 176, 178 can interface with complimentary connectors on the controller circuit board 156. This feature can permit the metrology devices 110, 112 to be "replaceable" or "swappable," e.g., to connect with the controller circuit board 156 to expand or modify functionality of the test apparatus 100. The second end 172 of the cables 164, 166, 168 may integrate onto the circuit boards 158, 160 (and electronics of the target meter 108), by way of, for example, direct solder, wire-bonding, or similar technique. However, it is possible that the cables 164, 166, 168 may also include connectors (the same and/or similar to connectors 174, 176, 178) to also provide releaseable engagement of the cables 164, 166 with the circuit boards 158, 160.

The circuit boards 150, 152, 154 can be configured with topology that uses discrete electrical components to facilitate operation of the test apparatus 100. This topology can include a substrate, preferably one or more printed circuit boards (PCB) of varying designs, although flexible printed circuit boards, flexible circuits, ceramic-based substrates, and silicon-based substrates may also suffice. For purposes of example, a collection of discrete electrical components may be disposed on the substrate to embody the functions of circuitry 156, 158, 160. Examples of discrete electrical components include transistors, resistors, and capacitors, as well as more complex analog and digital processing components (e.g., processors, storage memory, converters, etc.). This disclosure does not, however, foreclose use of solid-state devices and semiconductor devices, as well as full-function chips or chip-on-chip, chip-on-board, system-on chip, and like designs or technology known now or developed in the future.

Referring back to FIG. 6, topology for the controller board 150 can be configured to perform functions for the *in situ* commissioning processes discussed above. First circuitry 156 may include various components including a processor 180, which can be fully-integrated with processing and memory necessary to perform operations or coupled separately with a storage memory 182 that retains data 184. Examples of the data 184 can include executable instructions (e.g., firmware, software, computer programs, etc.) and information including the integrity log and event logs. In one implementation, first circuitry 156 may include driver circuitry 186 that couples with the processor 180. The driver circuitry 186 may be configured to facilitate component-to-component communication, shown in this example as operatively coupled with the connectors 174, 176, 178 and with an input/output 188 that communicates with the peripheral devices (e.g., the display 116, the peripheral computing device 118, the power supply 120, the flow device 126). The input/output 188 may be configured to accommodate signals (e.g., the signal 130) in digital or analog format, for example, to transmit (or receive) data by way of wired or wireless protocols. MODBUS, PROFIBUSS, and like protocols are often used use with automation technology and may comport with operation herein. Internally, circuitry 156 may include a bus may be useful to exchange signals among the components 174, 176, 178, 180, 186, 182, 188. The bus may utilize standard and proprietary communication busses including SPI, I²C, UNI/O, 1-Wire, or one or more like serial computer busses known at the time of the present writing or developed hereinafter.

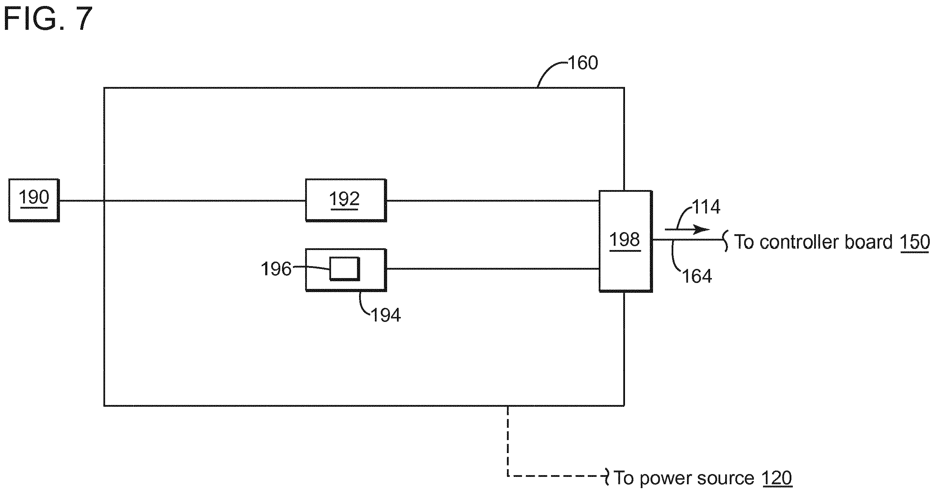

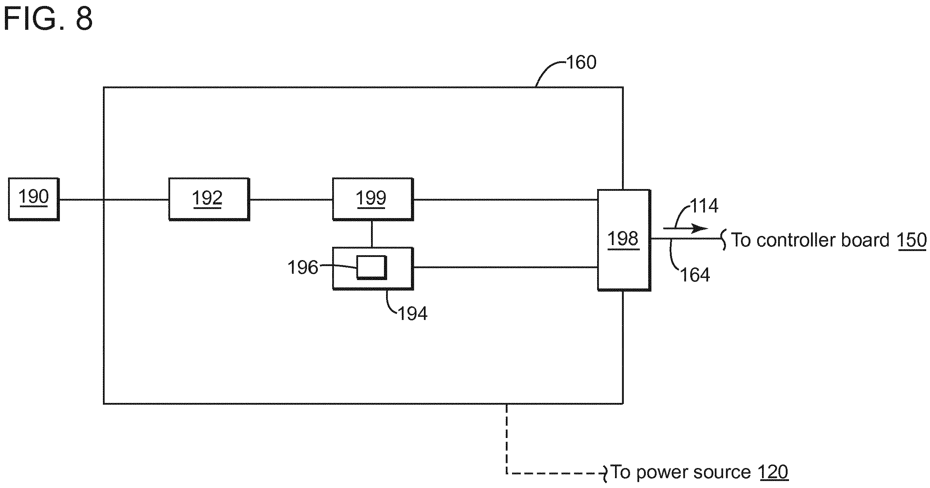

FIGS. 7 and 8 illustrate schematic diagrams for topology for circuitry (e.g., third circuitry 160) that might find use as part of the measuring device 112. As shown in FIG. 7, this topology may include a sensor 190 that may be configured to generate data for use at the controller board 150 to calculate the measured parameters of material 122 (FIG. 2). The data may reflect operating conditions (e.g., temperature, pressure, relative humidity, etc.) specific to material 122 (FIG. 2) or environment in proximity to the test apparatus 100. The sensor 190 may generate an output to third circuitry 160. In one implementation, third circuitry 160 may include a signal converter 192. For analog outputs, the signal converter 192 may be an analog-to-digital converter to convert the output to digital format for use as the first signal 114. Third circuitry 160 may also include a storage memory 194 that retains data 196. In one implementation, third circuitry 140 may leverage a connector 198 to couple one or both of the signal converter 192 and the storage memory 194 with the cable 164 that is used to convey the first signal 114 to the controller board 150. In FIG. 8, third circuitry 160 may also include a processor 199 that couples with one or more the signal converter 182 and the storage memory 194.

Data 184, 196 may include stored data that relates to operation of the respective devices 112, 114. Examples of stored data may define or describe entries in the integrity log (discussed above), passwords, names of operators, measurement results, and events in the event log (discussed above). In one implementation, these events may also include data that relates to operation of the respective device as part of the test apparatus 100. Such events may indicate, for example, missing measurement data, measurements are occurring out of range, that calibration constants are corrupted, and the like. The data 162 can also include executable instructions in the form of firmware, software, and computer programs that can configure the processors 158, 180, 192 to perform certain functions. However, while information and executable instructions may be stored locally as data 162, 176, 188, these devices may also be configured to access this information and executable instruction in a remote location, e.g., storage in the "cloud."

One or more of the stages of the methods can be coded as one or more executable instructions (e.g., hardware, firmware, software, software programs, etc.). These executable instructions can be part of a computer-implemented method and/or program, which can be executed by a processor and/or processing device. The processor may be configured to execute these executable instructions, as well as to process inputs and to generate outputs, as set forth herein.

Computing components (e.g., memory and processor) can embody hardware that incorporates with other hardware (e.g., circuitry) to form a unitary and/or monolithic unit devised to execute computer programs and/or executable instructions (e.g., in the form of firmware and software). As noted herein, exemplary circuits of this type include discrete elements such as resistors, transistors, diodes, switches, and capacitors. Examples of a processor include microprocessors and other logic devices such as field programmable gate arrays ("FPGAs") and application specific integrated circuits ("ASICs"). Memory includes volatile and non-volatile memory and can store executable instructions in the form of and/or including software (or firmware) instructions and configuration settings. Although all of the discrete elements, circuits, and devices function individually in a manner that is generally understood by those artisans that have ordinary skill in the electrical arts, it is their combination and integration into functional electrical groups and circuits that generally provide for the concepts that are disclosed and described herein.

As used herein, an element or function recited in the singular and proceeded with the word "a" or "an" should be understood as not excluding plural said elements or functions, unless such exclusion is explicitly recited. Furthermore, references to "one embodiment" of the claimed invention should not be interpreted as excluding the existence of additional embodiments that also incorporate the recited features.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

In light of the foregoing discussion, the embodiments herein incorporate improvements to equip test apparatus, nominally "prover systems," to perform *in situ* commissioning of components. A technical effect is to modularize the prover systems so as to easily expand and change functionalities, while at the same time maintaining legal and regulatory compliance. In this regard, the examples below include certain elements or clauses one or more of which may be combined with other elements and clauses describe embodiments contemplated within the scope of this disclosure.

Various aspects and embodiments of the present invention are defined by the following numbered clauses:
1. An apparatus for testing a target meter, said apparatus comprising:
   a platform configured to transit from a first position to a second position;
   a fluid moving unit disposed on the platform;
   a controller disposed on the platform and configured to communicate with the fluid moving unit; and
   a metrology device coupled with the controller, the metrology device configured to generate a first signal in digital format that relates to an analog signal that conveys information about material in a conduit,
   wherein the controller comprises executable instructions that configure the controller to,
      use the information of the first signal to generate a second signal, the second signal conveying information that defines a measured parameter for the material, and
      exchange information with the metrology device so as to verify a regulatory status for the metrology device that indicates compliance with legal metrology standards that is assigned to the metrology device separate and independent of the controller.
2. The test apparatus of clause 1, further comprising:
   storage memory coupled with the controller, the storage memory having validation data stored thereon that relates to the regulatory status of the metrology device.
3. The test apparatus of clause 1 or clause 2, wherein the executable instructions configure the controller to access a registry with a listing of stored data that defines the regulatory status for a plurality of metrology devices.
4. The test apparatus of any preceding clause, wherein the executable instructions configure the controller to set a fault condition that relates to the regulatory status of the metrology device.
5. The test apparatus of any preceding clause, wherein the executable instructions configure the controller to use the information to confirm that firmware on the metrology device is not corrupted.
6. The test apparatus of any preceding clause, wherein the executable instructions configure the controller to use the information to confirm calibration data is not corrupted.
7. The test apparatus of any preceding clause, wherein the executable instructions configure the controller to populate an event to an event log in response to the regulatory status of the metrology device.
8. The test apparatus of any preceding clause, wherein the metrology device comprises a gas meter disposed on the platform, and wherein the executable instructions configure the controller to calculate a value for the measured parameter using data that originates at the gas meter and is transmitted via the first signal in digital format.
9. The test apparatus of any preceding clause, wherein the metrology device comprises a first measuring device and a second measuring device, each having a sensor responsive to a first fluid condition and a second fluid condition in the gas meter, respectively, and wherein the executable instructions configure the controller to calculate the value for a measured parameter using data that originates at the first measuring device and the second measuring device.
10. A test apparatus, comprising:
   metrology devices; and
   a circuit board with a processor, storage memory coupled with the processor, and executable instructions stored on the storage memory, wherein the executable instructions configure the processor for,
      receiving a digital signal from the metrology devices; and
      verifying a regulatory status for the metrology devices using data transferred via the digital signal, the regulatory status indicating compliance with legal metrology standards that is assigned to the metrology devices separate and independent of the circuit board.
11. The test apparatus of any preceding clause, wherein the executable instructions configure the processor for,
   detecting a change in state at a connection on the circuit board used to exchange data with the metrology devices; and
   populating an event to an event log in response to the change in state, the event log storing dated records of actions that occur on the circuit board.
12. The test apparatus of any preceding clause, wherein the executable instructions configure the processor for,
   initiating a handshake with the metrology devices in response to the change in state at the connection, the handshake causing the metrology devices to transmit the data; and
   using identifying information stored among the data on the metrology devices to confirm the metrology devices are appropriate for use.
13. The test apparatus of any preceding clause, wherein the executable instructions configure the processor for,
   setting a fault condition that relates to the regulatory status of the metrology device, wherein the event corresponds with the fault condition
14. The test apparatus of any preceding clause, wherein the executable instructions configure the processor for,
   calculating a value for a measured parameter using data that originates at the metrology devices and is transmitted via the first signal
15. The test apparatus of any preceding clause, wherein the metrology devices comprise a rotary gas meter.
16. The test apparatus of any preceding clause, wherein the metrology devices comprises a temperature sensor and a pressure sensor.
17. The test apparatus of any preceding clause, further comprising:
   a platform that supports the metrology devices and the circuit board, wherein the platform is configured to transit from a first position to a second position.
18. A method, comprising:
   initiating a commissioning process on a test apparatus;
   unplugging a first measuring device from the test apparatus; and
   plugging a second measuring device to the test apparatus,
   wherein the commissioning process uses validation data on the second measuring device to verify a regulatory status for the second measuring device that indicates compliance with legal metrology standards that is assigned to the second metrology device separate and independent of the test apparatus.
19. The method of any preceding clause, further comprising:
   detecting a change of state at a connector that receives one or more of the first measuring device and the second measuring device; and
   using identifying information stored among the data on the second measuring device to confirm the second measuring device is appropriate for use on the test apparatus.
20. The method of any preceding clause, further comprising
   receiving an input from an end user, wherein the commissioning process requires the input to operate the test apparatus with the second measuring device.

## Claims

1. An apparatus (100) for testing a target meter, said apparatus comprising:
a platform (140) configured to transit from a first position to a second position;
a fluid moving unit (126) disposed on the platform (140);
a controller (128) disposed on the platform (148) and configured to communicate with the fluid moving unit (126); and
a metrology device (110, 112) coupled with the controller, the metrology device (110, 112) configured to generate a first signal (114) in digital format that relates to an analog signal,
wherein the controller (128) comprises executable instructions that configure the controller (128) to,
use the information of the first signal (114) to generate a second signal (130), the second signal (130) conveying information that defines a measured parameter for the material (122), and
exchange information with the metrology device (110, 112) so as to verify a regulatory status for the metrology device (110, 112) that indicates compliance with legal metrology standards that is assigned to the metrology device (110, 112) separate and independent of the controller (128).

2. The test apparatus (100) of claim 1, further comprising:
storage memory (182) coupled with the controller (128), the storage memory (182) having validation data stored thereon that relates to the regulatory status of the metrology device (110, 112).

3. The test apparatus (100) of claim 1 or claim 2, wherein the executable instructions configure the controller (128) to access a registry with a listing of stored data that defines the regulatory status for a plurality of metrology devices (110, 112).

4. The test apparatus (100) of any preceding claim, wherein the executable instructions configure the controller (128) to set a fault condition that relates to the regulatory status of the metrology device (110, 112).

5. The test apparatus (100) of any preceding claim, wherein the executable instructions configure the controller (128) to use the information to confirm that firmware on the metrology device (110, 112) is not corrupted.

6. The test apparatus (100) of any preceding claim, wherein the executable instructions configure the controller (128) to use the information to confirm calibration data is not corrupted.

7. The test apparatus (100) of any preceding claim, wherein the executable instructions configure the controller (128) to populate an event to an event log in response to the regulatory status of the metrology device (110, 112).

8. The test apparatus (100) of any preceding claim, wherein the metrology device (110, 112) comprises a gas meter (110) disposed on the platform (148), and wherein the executable instructions configure the controller (128) to calculate a value for the measured parameter using data that originates at the gas meter (110) and is transmitted via the first signal (114) in digital format.

9. The test apparatus (100) of claim 8, wherein the metrology device (110, 112) comprises a first measuring device (136) and a second measuring device (138), each having a sensor responsive to a first fluid condition and a second fluid condition in the gas meter (110), respectively, and wherein the executable instructions configure the controller (128) to calculate the value for a measured parameter using data that originates at the first measuring device (136) and the second measuring device (138).

10. A test apparatus (100), comprising:
metrology devices (110, 112); and
a circuit board (150) with a processor (180), storage memory (182) coupled with the processor (180), and executable instructions (184) stored on the storage memory (182), wherein the executable instructions (184) configure the processor (180) for,
receiving a digital signal (114) from the metrology devices (110, 112); and
verifying a regulatory status for the metrology devices (110, 112) using data transferred via the digital signal (114), the regulatory status indicating compliance with legal metrology standards that is assigned to the metrology devices (110, 112) separate and independent of the circuit board (150).

11. The test apparatus of claim 10, wherein the executable instructions configure the processor for,
detecting a change in state at a connection on the circuit board used to exchange data with the metrology devices; and
populating an event to an event log in response to the change in state, the event log storing dated records of actions that occur on the circuit board.

12. The test apparatus of claim 10 or claim 11, wherein the executable instructions configure the processor for,
initiating a handshake with the metrology devices in response to the change in state at the connection, the handshake causing the metrology devices to transmit the data; and
using identifying information stored among the data on the metrology devices to confirm the metrology devices are appropriate for use.

13. A method, comprising:
initiating a commissioning process on a test apparatus;
unplugging a first measuring device from the test apparatus; and
plugging a second measuring device to the test apparatus,
wherein the commissioning process uses validation data on the second measuring device to verify a regulatory status for the second measuring device that indicates compliance with legal metrology standards that is assigned to the second metrology device separate and independent of the test apparatus.

14. The method of claim 13, further comprising:
detecting a change of state at a connector that receives one or more of the first measuring device and the second measuring device; and
using identifying information stored among the data on the second measuring device to confirm the second measuring device is appropriate for use on the test apparatus.

15. The method of claim 13 or claim 14, further comprising
receiving an input from an end user, wherein the commissioning process requires the input to operate the test apparatus with the second measuring device.
